(19) Europäisches Patentamt
European Patent Office
Office européen des brevets

(11) **EP 2 986 000 A1**

(12) **EUROPEAN PATENT APPLICATION**
published in accordance with Art. 153(4) EPC

(43) Date of publication:
**17.02.2016 Bulletin 2016/07**

(51) Int Cl.:
***H04N 19/51*** (2014.01)   ***H04N 19/513*** (2014.01)

(21) Application number: **14782629.1**

(22) Date of filing: **11.04.2014**

(86) International application number:
**PCT/KR2014/003131**

(87) International publication number:
**WO 2014/168443 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.04.2013 US 201361810728 P**

(71) Applicant: **LG Electronics Inc.**
**Seoul 150-721 (KR)**

(72) Inventors:
• **HEO, Jin**
  **Seoul 137-893 (KR)**
• **NAM, Junghak**
  **Seoul 137-893 (KR)**
• **KIM, Taesup**
  **Seoul 137-893 (KR)**
• **YEA, Sehoon**
  **Seoul 137-893 (KR)**

(74) Representative: **Diehl & Partner GbR**
**Patentanwälte**
**Erika-Mann-Strasse 9**
**80636 München (DE)**

(54) **METHOD AND APPARATUS FOR PROCESSING VIDEO SIGNAL**

(57)    A method for processing a video signal according to the present invention comprises the steps of: searching for a reference view motion vector corresponding to a disparity vector of a current texture block, a motion vector of a spatial neighbor block of the current texture block, a disparity vector of the current texture block, a view synthesis prediction disparity vector of the current texture block, and a motion vector of a temporal neighbor block of the current texture block, in a predetermined sequence; storing the searched motion vectors in a candidate list, in the predetermined sequence; and performing an inter-prediction on the current texture block, using one among the motion vectors stored in the candidate list, wherein the candidate list stores a predetermined number of motion vectors, and the predetermined sequence is set such that the view synthesis prediction disparity vector is always stored.

FIG. 5

**Description**

[Technical Field]

The present invention relates to a method and device for processing a video signal.

[Background Art]

Compression refers to a signal processing technique for transmitting digital information through a communication line or storing the digital information in a form suitable for a storage medium. Compression targets include audio, video and text information. Particularly, a technique of compressing images is called video compression.

Multiview video has characteristics of spatial redundancy, temporal redundancy and inter-view redundancy.

[Disclosure]

[Technical Problem]

An object of the present invention is to improve video signal coding efficiency.

[Technical Solution]

The present invention generates a motion vector candidate list such that view synthesis prediction can be used in order to increase video signal coding efficiency.

[Advantageous Effects]

According to the present invention, information for view synthesis prediction can be stored in the motion vector candidate list.

Accordingly, the present invention can increase inter-view coding efficiency by performing inter-prediction using a view synthesis prediction method.

[Description of Drawings]

FIG. 1 is a block diagram of a broadcast receiver according to an embodiment of the present invention.
FIG. 2 is a block diagram of a video decoder according to an embodiment of the present invention.
FIG. 3 is a block diagram illustrating a detailed configuration of an inter-prediction unit according to an embodiment of the present invention.
FIG. 4 illustrates a method of inter-predicting a multiview texture image for explaining an embodiment of the present invention.
FIG. 5 is a flowchart illustrating a method of performing inter-prediction in a video processing apparatus according to an embodiment of the present invention.
FIG. 6 is a view for illustrating the order of searching for vectors and storing searched vectors in a candidate list according to an embodiment of the present invention.
FIG. 7 is a flowchart illustrating a method of searching for vectors and storing searched vectors in the candidate list according to an embodiment of the present invention.
FIG. 8 is a flowchart illustrating a method of searching for motion information of a spatial neighboring block for view synthesis prediction according to an embodiment of the present invention.
FIG. 9 is a flowchart illustrating a view synthesis prediction method according to an embodiment of the present invention.
FIG. 10 is a view illustrating a view synthesis prediction method according to an embodiment of the present invention.

[Best Mode]

A method for processing a video signal according to an embodiment of the present invention includes: searching for a reference view motion vector corresponding to a disparity vector of a current texture block, motion vectors of spatial neighboring blocks of the current texture block, the disparity vector of the current texture block, a view synthesis prediction disparity vector of the current texture block, and a motion vector of a temporal neighboring block of the current texture block, in a predetermined order; storing the found vectors in a candidate list in the predetermined order; and performing inter-prediction on the current texture block using one of the vectors stored in the candidate list, wherein the candidate list stores a predetermined number of vectors, and the predetermined order is set such that the view synthesis prediction disparity vector is always stored.

When the spatial neighboring blocks of the current texture block have been coded using view synthesis prediction, view synthesis prediction disparity vectors of the spatial neighboring blocks may be stored instead of the motion vectors thereof in the candidate list.

The spatial neighboring blocks of the current texture block may include a left spatial neighboring block, an upper spatial neighboring block, a right upper spatial neighboring block, a left lower spatial neighboring block and a left upper spatial neighboring block.

The predetermined order may correspond to the order of the reference view motion vector, a motion vector of the left spatial neighboring block, a motion vector of the upper spatial neighboring block, a motion vector of the right upper spatial neighboring block, the disparity vector, the view synthesis prediction disparity vector, a motion vector of the left lower spatial neighboring block, a motion vector of the left upper spatial neighboring block, and the motion vector of the temporal neighboring block.

When inter-prediction is performed on the current texture block using the view synthesis prediction disparity vector in the candidate list, the performing of inter-prediction on the current texture block may include: obtaining a corresponding depth block of a reference view, indicated by the view synthesis prediction disparity vector; deriving a modified disparity vector using a depth value of the depth block; and performing inter-view inter-prediction on the current texture block using the modified disparity vector.

The candidate list may store a view synthesis prediction flag indicating that inter-prediction is performed using view synthesis prediction, along with each vector, wherein the view synthesis prediction flag is set when the view synthesis prediction disparity vector is stored in the candidate list.

An apparatus for processing a video signal according to an embodiment of the present invention includes: a candidate list generator configured to search for a reference view motion vector corresponding to a disparity vector of a current texture block, motion vectors of spatial neighboring blocks of the current texture block, the disparity vector of the current texture block, a view synthesis prediction disparity vector of the current texture block and a motion vector of a temporal neighboring block of the current texture block, in a predetermined order and to store the searched vectors in a candidate list in the predetermined order; and

an inter-prediction execution unit configured to perform inter-prediction on the current texture block using one of the vectors stored in the candidate list, wherein the candidate list generator stores a predetermined number of vectors in the candidate list and sets the predetermined order such that the view synthesis prediction disparity vector is always stored.

When the spatial neighboring blocks of the current texture block have been coded using view synthesis prediction, the candidate list generator may store view synthesis prediction disparity vectors of the spatial neighboring blocks in the candidate list instead of the motion vectors thereof.

The spatial neighboring blocks of the current texture block may include a left spatial neighboring block, an upper spatial neighboring block, a right upper spatial neighboring block, a left lower spatial neighboring block and a left upper spatial neighboring block.

The predetermined order may correspond to the order of the reference view motion vector, a motion vector of the left spatial neighboring block, a motion vector of the upper spatial neighboring block, a motion vector of the right upper spatial neighboring block, the disparity vector, the view synthesis prediction disparity vector, a motion vector of the left lower spatial neighboring block, a motion vector of the left upper spatial neighboring block, and the motion vector of the temporal neighboring block.

When inter-prediction is performed on the current texture block using the view synthesis prediction disparity vector in the candidate list, the inter-prediction execution unit may obtain a corresponding depth block of a reference view, which is indicated by the view synthesis prediction disparity vector, derive a modified disparity vector using a depth value of the depth block and perform inter-view inter-prediction on the current texture block using the modified disparity vector.

The candidate list may store a view synthesis prediction flag indicating that inter-prediction is performed using view synthesis prediction, along with each vector, wherein the candidate list generator sets the view synthesis prediction flag when the view synthesis prediction disparity vector is stored in the candidate list.

[Modes for Invention]

Techniques for compressing or decoding multiview video signal data consider spatial redundancy, temporal redundancy and inter-view redundancy. In the case of a multiview image, multiview texture images captured at two or more views can be coded in order to generate a three-dimensional image. Furthermore, depth data corresponding to the multiview texture images may be coded as necessary. The depth data can be compressed in consideration of spatial redundancy, temporal redundancy or inter-view redundancy. Depth data is information on the distance between a camera and a corresponding pixel. The depth data can be flexibly interpreted as depth related information such as depth information, a depth image, a depth picture, a depth sequence and a depth bitstream in the specification. In addition, coding can include both the concepts of encoding and decoding in the specification and can be flexibly interpreted within the technical spirit and technical scope of the present invention.

In the present specification, a current block and a current picture respectively refer to a block and a picture to be processed (or coded) and a current view refers to a view to be processed. In addition, a neighboring block and a neighboring view may respectively refer to a block other than the current block and a view other than the current view. A reference view used for inter-view prediction of a multiview video image may refer to a base view or an independent view.

A texture block of a neighboring view can be specified using an inter-view disparity vector. Here, a disparity vector may be derived using a disparity vector of a neighboring block of a current view texture block and derived using a depth value of the current view texture block.

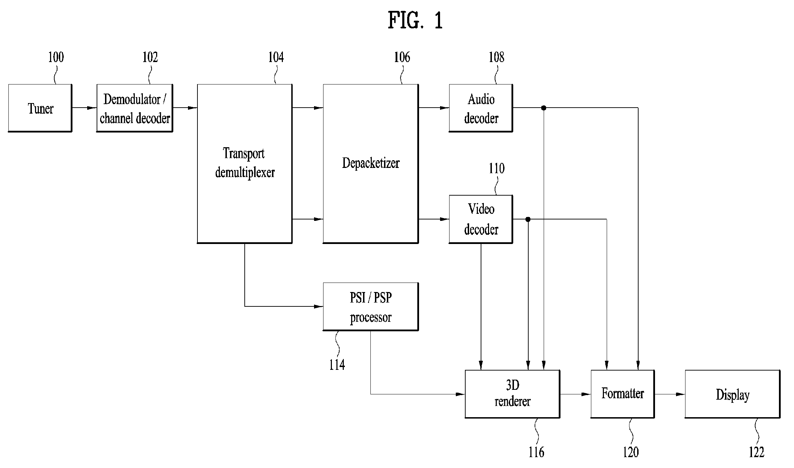

FIG. 1 is a block diagram of a broadcast receiver according to an embodiment to which the present invention is applied.

The broadcast receiver according to the present embodiment receives terrestrial broadcast signals to reproduce images. The broadcast receiver can generate three-dimensional content using received depth related information. The broadcast receiver includes a tuner 100, a demodulator/channel decoder 102, a transport demultiplexer 104, a depacketizer 106, an audio decoder 108, a video decoder 110, a PSI/PSIP processor 114, a 3D renderer 116, a formatter 120 and a display 122.

The tuner 100 selects a broadcast signal of a channel tuned to by a user from among a plurality of broadcast signals input through an antenna (not shown) and outputs the selected broadcast signal. The demodulator/channel decoder 102 demodulates the broadcast signal from the tuner 100 and performs error correction decoding on the demodulated signal to output a transport stream TS. The transport demultiplexer 104 demultiplexes the transport stream so as to divide the transport stream into a video PES and an audio PES and extract PSI/PSIP information. The depacketizer 106 depacketizes the video PES and the audio PES to restore a video ES and an audio ES. The audio decoder 108 outputs an audio bitstream by decoding the audio ES. The audio bitstream is converted into an analog audio signal by a digital-to-analog converter (not shown), amplified by an amplifier (not shown) and then output through a speaker (not shown). The video decoder 110 decodes the video ES to restore the original image. The decoding processes of the audio decoder 108 and the video decoder 110 can be performed on the basis of a packet ID (PID) confirmed by the PSI/PSIP processor 114. During the decoding process, the video decoder 110 can extract depth information. In addition, the video decoder 110 can extract additional information necessary to generate an image of a virtual camera view, for example, camera information or information for estimating an occlusion hidden by a front object (e.g. geometrical information such as object contour, object transparency information and color information), and provide the additional information to the 3D renderer 116. However, the depth information and/or the additional information may be separated from each other by the transport demultiplexer 104 in other embodiments of the present invention.

The PSI/PSIP processor 114 receives the PSI/PSIP information from the transport demultiplexer 104, parses the PSI/PSIP information and stores the parsed PSI/PSIP information in a memory (not shown) or a register so as to enable broadcasting on the basis of the stored information. The 3D renderer 116 can generate color information, depth information and the like at a virtual camera position using the restored image, depth information, additional information and camera parameters.

In addition, the 3D renderer 116 generates a virtual image at the virtual camera position by performing 3D warping using the restored image and depth information regarding the restored image. While the 3D renderer 116 is configured as a block separated from the video decoder 110 in the present embodiment, this is merely an example and the 3D renderer 116 may be included in the video decoder 110.

The formatter 120 formats the image restored in the decoding process, that is, the actual image captured by a camera, and the virtual image generated by the 3D renderer 116 according to the display mode of the broadcast receiver such that a 3D image is displayed through the display 122. Here, synthesis of the depth information and virtual image at the virtual camera position by the 3D renderer 116 and image formatting by the formatter 120 may be selectively performed in response to a user command. That is, the user may manipulate a remote controller (not shown) such that a composite image is not displayed and designate an image synthesis time.

As described above, the depth information for generating the 3D image is used by the 3D renderer 116. However, the depth information may be used by the video decoder 110 in other embodiments. A description will be given of various embodiments in which the video decoder 110 uses the depth information.

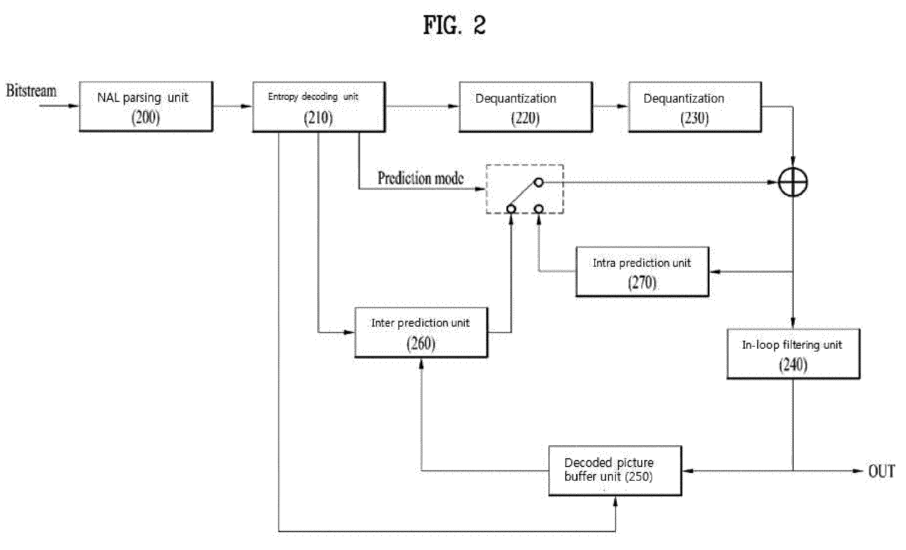

FIG. 2 is a block diagram of the video decoder according to an embodiment to which the present invention is applied.

Referring to FIG. 2, the video decoder 110 may include an NAL parsing unit 200, an entropy decoding unit 210, an inverse quantization unit 220, an inverse transform unit 230, an in-loop filter unit 240, a decoded picture buffer unit 250, an inter-prediction unit 260 and an intra prediction unit 270. Here, a bitstream may include texture data and depth data. While texture data and depth data are represented by one bitstream in FIG. 2, the texture data and the depth data may be transmitted through separate bitstreams. That is, the texture data and the depth data can be transmitted through one bitstream or separate bitstreams. A picture described in the following may refer to a text picture and a depth picture.

The NAL parsing unit 200 performs parsing per NAL basis in order to decode the received bitstream. An NAL header region, an extended region of the NAL header, a sequence header region (e.g., sequence parameter set), an extended region of the sequence header, a picture header region (e.g., picture parameter set), an extended region of the picture header, a slice header region, an extended region of the slice header or a macro block region may include various types of attribute information regarding depth.

The received bitstream may include camera parameters. The camera parameters may include an intrinsic camera parameter and an extrinsic camera parameter. The intrinsic camera parameter may include a focal length, an aspect ratio, a principal point and the like and the extrinsic camera parameter may include camera position information in the global coordinate system and the like.

The entropy decoding unit 210 extracts a quantized transform coefficient and coding information for prediction of a texture picture and a depth picture from the parsed bitstream through entropy decoding.

The inverse quantization unit 220 multiplies the quantized transform coefficient by a predetermined constant (quantization parameter) so as to obtain a transformed coefficient and the inverse transform unit 230 inversely transforms the coefficient to restore texture picture data or depth picture data.

The intra-prediction unit 270 performs intra-prediction using the restored depth information or depth picture data of the current depth picture. Here, coding information used for intra-prediction may include an intra-prediction mode and partition information of intra-prediction.

The in-loop filter unit 240 applies an in-loop filter to each coded macro block in order to reduce block distortion. The in-loop filtering unit 240 improves the texture of a decoded frame by smoothing edges of blocks. A filtering process is selected depending on boundary strength and an image sample gradient around a boundary. Filtered texture pictures or depth pictures are output or stored in the decoded picture buffer unit 250 to be used as reference pictures.

The decoded picture buffer unit 250 stores or opens previously coded texture pictures or depth pictures for inter-prediction. Here, to store coded texture pictures or depth pictures in the decoded picture buffer unit 250 or to open stored coded texture pictures or depth pictures, frame_num and POC (Picture Order Count) of each picture are used. Since the previously coded pictures may include pictures corresponding to views different from the current picture, view information for identifying views of pictures as well as frame_num and POC can be used in order to use the previously coded pictures as reference pictures.

In addition, the decoded picture buffer unit 250 may use information about views in order to generate a reference picture list for inter-view prediction of pictures. For example, the decoded picture buffer unit 250 can use reference information. The reference information refers to information used to indicate dependence between views of pictures. For example, the reference information may include the number of views, a view identification number, the number of reference pictures, depth view identification numbers of reference pictures and the like.

The inter-prediction unit 260 may perform motion compensation of a current block using reference pictures and motion vectors stored in the decoded picture buffer unit 250. Motion vectors of neighboring blocks of the current block are extracted from a video signal and a motion vector prediction value of the current block is obtained. Motion of the current block is compensated using the motion vector prediction value and a differential vector extracted from the video signal. Such motion compensation may be performed using one reference picture or multiple pictures.

In the present specification, motion information can be considered to include a motion vector and reference index information in a broad sense. In addition, the inter-prediction unit 260 can perform temporal inter-prediction in order to perform motion compensation. Temporal inter-prediction may refer to inter-prediction using motion information of a reference picture, which corresponds to the same view as a current texture block and a different time from the current texture block, and the current texture block. The motion information can be interpreted as information including a motion vector and reference index information.

In the case of a multiview image obtained by a plurality of cameras, inter-view inter-prediction can be performed in addition to temporal inter-prediction. Inter-view inter-prediction may refer to inter-prediction using motion information of a reference picture, which corresponds to a view different from the current texture block, and the current texture block. To discriminate from motion information used for normal temporal inter-prediction, motion information used for inter-view inter-prediction is referred to as inter-view motion information. Accordingly, the inter-view motion information can be flexibly interpreted as information including a disparity vector and inter-view reference index information. Here, the disparity vector can be used to specify a texture block of a neighboring view.

A description will be given of a method of performing inter-prediction of the current texture block in the inter-prediction unit 260.

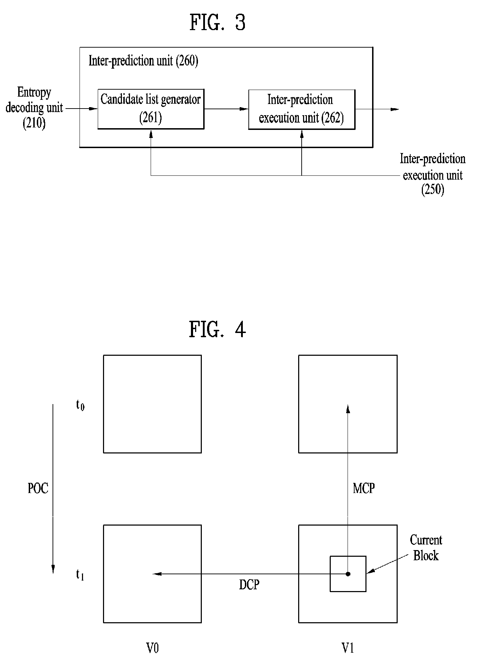

FIG. 3 is a block diagram for describing the detailed configuration of the inter-prediction unit according to an embodiment of the present invention.

Referring to FIG. 3, the inter-prediction unit 260 may include a candidate list generator 261 and an inter-prediction execution unit 262. The inter-prediction unit 260 according to the present invention may refer to and reuse motion vectors in neighboring blocks (spatial neighboring blocks, temporal neighboring blocks or neighboring blocks of a reference view corresponding to the current texture block) of the current texture block. That is, the inter-prediction unit 260 may search for neighboring blocks in a predetermined order and reuse motion vectors of the neighboring blocks. Specifically, the inter-prediction unit 260 can search neighboring blocks for motion vectors that can be used for inter-prediction so as to generate a candidate list of motion vectors and perform inter-prediction by selecting one of the motion vectors stored in the candidate list. Here, the candidate list may refer to a list generated by searching the current texture block and neighboring blocks of the current texture block in a predetermined order.

The candidate list generator 261 can generate a candidate list of motion vector candidates which can be used for inter-prediction of the current texture block. Specifically, the candidate list generator 261 can search a current texture block of a current texture picture received from the entropy decoding unit and neighboring blocks of the current texture block for motion vectors in a predetermined order and store the searched motion vector in the candidate list in the predetermined order.

The candidate list generator 261 according to the present invention can store only a predetermined number of motion vectors in the candidate list. That is, the number of motion vectors which can be stored in the candidate list is restricted and, when the candidate list is full of motion vectors searched with higher priority, motion vectors searched with lower priority may not be stored in the candidate list. For example, when the number of motion vectors which can be stored in the candidate list is 7, the eighth searched motion vector cannot be stored in the candidate list when the first to seventh motion vectors have been stored in the candidate list. Alternatively, when the designated number of motion vectors has been stored in the candidate list, the candidate list generator 261 may suspend motion vector search.

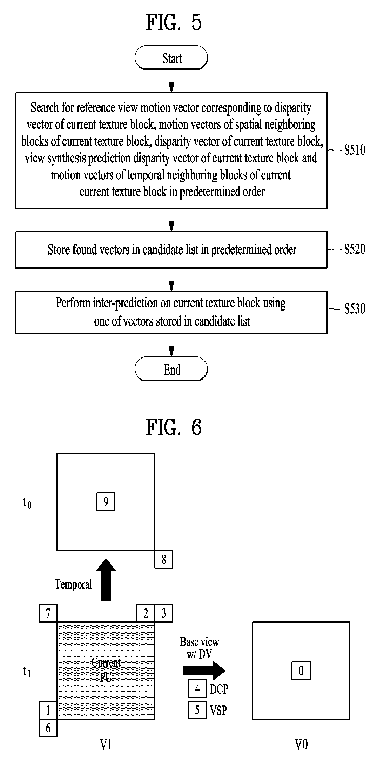

According to the aforementioned process, motion vectors searched with lower priority may not be used for inter-prediction since the motion vectors are not stored in the candidate list. Accordingly, a motion vector search order in generation of the candidate list can largely affect coding efficiency. The order of searching for motion vectors and storing searched motion vectors in the candidate list will be described in detail with reference to FIGS. 5 to 7.

While the candidate list generator 261 may use the generated candidate list as a final candidate list for deriving the motion vector of the current texture block, the candidate list generator 261 may correct the candidate list in order to eliminate redundancy of motion vectors stored in the candidate list. For example, the candidate list generator 261 can check whether spatial motion vectors are identical in the generated candidate list. When identical spatial motion vectors are present, one of the identical spatial motion vectors can be removed from the candidate list. Furthermore, when the number of motion vectors remaining in the candidate list after removal of redundancy of motion information in the candidate list is less than 2, a zero motion vector can be added. When the number of motion vectors remaining in the candidate list even after removal of redundancy of motion information in the candidate list exceeds 2, motion information other than two pieces of motion information can be removed from the candidate list.

Here, the two pieces of motion information remaining in the candidate list may be motion information having relatively small list identification indices. In this case, a list identification index is assigned per motion information included in the candidate list and may refer to information for identifying motion information included in the candidate list.

The inter-prediction execution unit 262 can derive the motion vector of the current texture block from the candidate list generated by the candidate list generator 261.

The inter-prediction execution unit 262 can extract motion vector identification information about the current texture block from a bitstream. The motion vector identification information may be information which specifies a motion vector candidate used as the motion vector or a predicted motion vector of the current texture block. That is, a motion vector candidate corresponding to the extracted motion vector identification information can be extracted from the candidate list and set as the motion vector or predicted motion vector of the current texture block. When the motion vector candidate corresponding to the motion vector identification information is set as the predicted motion vector of the current texture block, a motion vector differential value can be used in order to restore the motion vector of the current texture block. Here, the motion vector differential value may refer to a differential vector between a decoded motion vector and a predicted motion vector. Accordingly, the motion vector of the current texture block can be decoded using the predicted motion vector obtained from the motion vector list and the motion vector differential value extracted from the bitstream.

A pixel value of the current texture block can be predicted using the decoded motion vector and a reference picture list. Here, the reference picture list may include reference pictures for inter-view inter-prediction as well as reference pictures for temporal inter-prediction.

Referring to FIG. 4, a reference picture is a restored picture and can be composed of an image (V1, t0) of the same view as a currently coded image (V1, t1) (V representing view and t representing time) and an image (V0, t1) of a view different from the currently coded picture. In this case, a case in which the view (V1, t0) of a reference picture for predicting the current texture block is the same as that of the currently processed picture is referred to as motion-compensated prediction (MCP) and the view (V0, t1) of the reference picture is different from that of the currently processed picture is referred to as disparity-compensated prediction (DCP). In the case of a multiview video image, DCP as well as MCP can be used.

As described above, the inter-prediction unit generates the candidate list and performs inter-prediction. A description will be given of the order of searching for motion vectors and storing searched motion vectors in the candidate list with reference to FIGS. 5 to 7.

FIG. 5 is a flowchart illustrating a method of performing inter-prediction in a video processing apparatus according to an embodiment of the present invention.

Referring to FIG. 5, the video processing apparatus may search for a reference view motion vector corresponding to a disparity vector of a current texture block, a motion vector of a spatial neighboring block of the current texture block, the disparity vector of the current texture block, a view synthesis prediction disparity vector of the current texture block and a motion vector of a temporal neighboring block of the current texture block in a predetermined order (S510).

A description will be given of the reference view motion vector, the motion vector of the spatial neighboring block, the motion vector of the temporal neighboring block and the view synthesis prediction disparity vector.

The reference view motion vector can be derived from a motion vector of a corresponding block positioned in a view different from the current texture block. In this case, the corresponding block may be a block indicated by the disparity vector of the current texture block. For example, a corresponding block in a different view can be specified using the disparity vector of the current texture block and a motion vector of the specified corresponding block in the different view can be set as the reference view motion vector of the current texture block.

The motion vector of the spatial neighboring block can be derived from a motion vector of a spatial neighboring block positioned in the same view as the current texture block. The spatial neighboring block can include at least one of a left neighboring block, an upper neighboring block, a right upper neighboring block, a left lower neighboring block and a left upper neighboring block of the current texture block.

The motion vector of the temporal neighboring block can be derived from a motion vector of a temporal neighboring block positioned in the same view as the current texture block. For example, the temporal neighboring block can correspond to a collocated block of the current texture block in a picture positioned in the same view as the current texture block while corresponding to a time different from the current texture block or a neighboring block of a block at the same position as the current texture block. Here, the picture including the temporal neighboring block may be specified by index information.

A disparity vector may refer to a block indicating a texture block of a neighboring view, as described above. The disparity vector can be derived 1) using depth data (DoNBDV, Depth-oriented Neighboring Block Disparity Vector) and derived 2) from a disparity vector of a neighboring vector (NBDV, Neighboring Block Disparity Vector).

1) Method of deriving a disparity vector using depth data

A disparity vector can indicate inter-view disparity in a multiview image. In the case of a multiview image, inter-view disparity according to camera position may be generated and the disparity vector may compensate for such inter-view disparity. A description will be given of a method of deriving the disparity vector of the current texture block using depth data.

Texture data and depth data may be obtained from a bitstream. Specifically, the depth data can be transmitted separately from a texture image, like a depth bitstream, a depth sequence, a depth picture and the like, or coded into a corresponding texture image and transmitted. Accordingly, the depth data of the current texture block can be acquired according to transmission scheme. When the current texture block includes multiple pixels, depth data corresponding to a corner pixel of the current texture block can be used. Otherwise, depth data corresponding to a center pixel of the current texture block may be used. Alternatively, one of a maximum value, a minimum value and a mode from among multiple pieces of depth data corresponding to the multiple pixels may be selectively used or the average of the multiple pieces of depth data may be used. The disparity vector of the current texture block can be derived using the acquired depth data and camera parameters. The derivation method will now be described in detail on the basis of Equations 1 and 2.

[Equation 1]

$$Z = \frac{1}{\frac{D}{255} S \left( \frac{1}{Z_{near}} - \frac{1}{Z_{far}} \right) + \frac{1}{Z_{far}}}$$

In Equation 1, Z denotes a distance between a corresponding pixel and a camera, D is a value obtained by quantizing Z and corresponds to depth data according to the present invention. $Z_{near}$ and $Z_{far}$ respectively represent a minimum value and a maximum value of Z defined for a view including the depth data. $Z_{near}$ and $Z_{far}$ may be extracted from a bitstream through a sequence parameter set, a slice header and the like and may be information predetermined in the decoder. Accordingly, when the distance Z between the corresponding pixel and the camera is quantized at a level of 256, Z can be reconstructed using depth data $Z_{near}$ and $Z_{far}$ as represented by Equation 1. Subsequently, the disparity vector for the current texture block may be derived using reconstructed Z, as represented by Equation 2.

[Equation 2]

$$d = \frac{fsB}{2}$$

In Equation 2, f denotes the focal length of a camera and B denotes a distance between cameras. It can be assumed that all cameras have the same f and B, and thus f and B may be information predefined in the decoder.

When only texture data of a multiview image is coded, information about camera parameters cannot be used and thus the method of deriving the disparity vector from the depth data cannot be used. Accordingly, when only the texture data of the multiview image is coded, a disparity vector map in which disparity vectors are stored can be used. The disparity vector map may be a map in which disparity vectors composed of horizontal components and vertical components are stored in two-dimensional arrangement. The disparity vector map according to the present invention can be represented in various sizes. For example, the disparity vector map can have a size of 1x1 when only one disparity vector is used per picture. When a disparity vector is used for every 4x4 block in a picture, the disparity vector map has a width and a height corresponding to a quarter of the picture size and thus the disparity vector map may have a size corresponding to 1/16 of the picture size. Furthermore, the size of the current texture block in one picture may be adaptively determined and a disparity vector may be stored per texture block.

The disparity vector can be derived using a global disparity vector (GDV) derived from the syntax of a slice or a picture. The global disparity vector is a vector which indicates a different view including a reference picture from the current view in each slice or picture including a plurality of blocks. Since the global disparity vector is equally derived for a plurality of texture blocks, an offset vector for compensating for a motion vector can be additionally transmitted in order to detect a correct reference block for each texture block when texture blocks have different disparity vectors. A disparity vector obtained by summing the global disparity vector and the offset vector can be included in disparity vector candidates of the current texture block.

The disparity vector of the current texture block can be derived through the aforementioned method.

2) Method of deriving a disparity vector from a disparity vector of a neighboring block.

The disparity vector of the current texture block can be derived from a motion vector of a neighboring block which has been coded through inter-view inter-prediction, from among spatial neighboring blocks or temporal neighboring blocks of the current texture block. That is, it is possible to search for neighboring blocks coded through inter-view inter-prediction and to derive the disparity vector of the current texture block from the disparity vector of the neighboring block coded through inter-view inter-prediction.

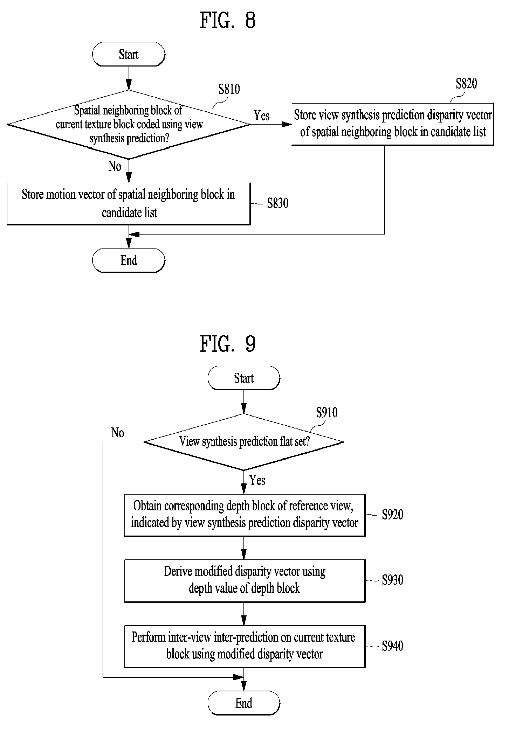

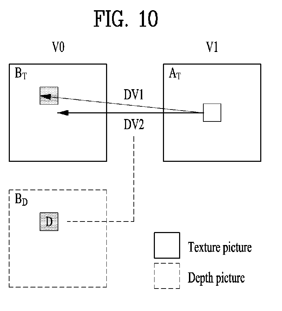

A view synthesis prediction disparity vector refers to a disparity vector used for view synthesis prediction (VSP). Here, view synthesis prediction refers to technology of generating prediction information from a reference picture using depth data. View synthesis prediction will be described in detail later with reference to FIGS. 9 and 10.

The motion vectors searched in step S510 may be stored in the candidate list in the predetermined order (S520).

According to an embodiment of the present invention, the candidate list may further store a view synthesis prediction flag along with each motion vector. Here, the view synthesis prediction flag can indicate execution of inter-prediction using view synthesis prediction.

In the present invention, a view synthesis prediction flag value can be set when a view synthesis prediction disparity vector is stored in the candidate list.

For example, the view synthesis flag value can be set to 1 from 0 so as to indicate that inter-prediction is performed using view synthesis prediction on the basis of a disparity vector stored along with the view synthesis flag value in the candidate list. That is, when the view synthesis prediction flag is set to "1", view synthesis prediction can be performed.

According to an embodiment of the present invention, the number of motion vectors which can be stored in the candidate list may be restricted. Accordingly, the motion vector search and storage order may affect coding efficiency.

A description will be given of the order of searching and storing motion vectors which can be stored in the candidate list.

FIG. 6 is a view for illustrating the order of searching and storing motion vectors which can be stored in the candidate list.

According to an embodiment of the present invention, motion vectors can be searched and stored in the candidate list in the following order.

The motion vector search and storage order is described with reference to FIG. 6.

1) A reference view motion vector (0) corresponding to a motion vector of a corresponding block of a reference view, which corresponds to a disparity vector of the current texture block

2) A motion vector of (1) a left spatial neighboring block of the current texture block

3) A motion vector (2) of an upper spatial neighboring block of the current texture block

4) A motion vector (3) of a right upper spatial neighboring block of the current texture block

5) A disparity vector (4) of the current texture block

6) A view synthesis prediction disparity vector (5) of the current texture block

7) A motion vector (6) of a left lower spatial neighboring block of the current texture block

8) A motion vector (7) of a left upper spatial neighboring block of the current texture block

9) A motion vector (8) of a right lower temporal neighboring block of the current texture block

10) A motion vector (9) of a center temporal neighboring block of the current texture block

Motion vectors can be searched in the aforementioned order to generate the candidate list.

Search is started for 1) and, when the corresponding motion vector is not present, the next motion vector can be searched. For example, when the candidate list can store up to six motion vectors, the motion vectors are searched in the aforementioned order and six motion vectors are stored in the candidate list, search may not be performed.

A maximum number of motion vectors which can be stored in the candidate list may be six as in the aforementioned example. In this case, when the candidate list is generated in the order shown in FIG. 6, the view synthesis prediction disparity vector can be stored in the candidate list all the time. Accordingly, availability of the view synthesis prediction mode is increased and thus coding efficiency can be improved. That is, the search order of the view synthesis prediction disparity vector can be set to less than the number of motion vectors which can be stored in the candidate list so as to improve availability of the view synthesis prediction mode.

The motion vector search and storage order is not limited to the aforementioned embodiment and can be changed as long as the view synthesis prediction disparity vector can be stored in the candidate list all the time.

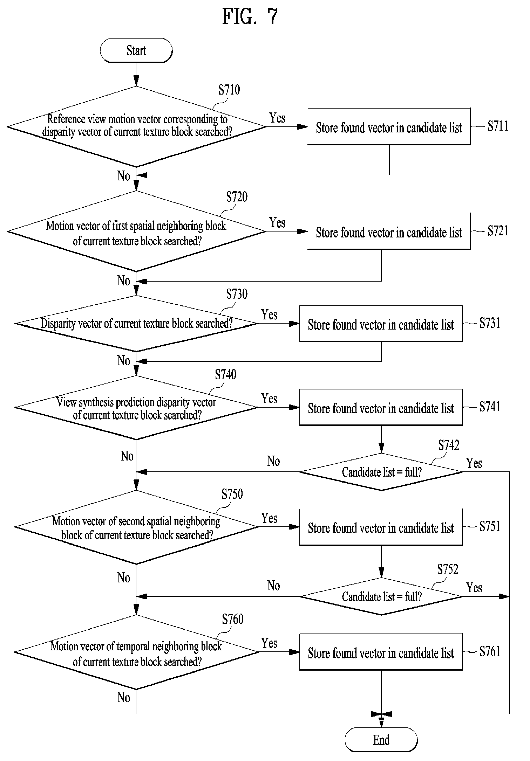

FIG. 7 is a flowchart illustrating a method of searching and storing motion vectors which can be stored in the candidate list according to an embodiment of the present invention. Prior to description of FIG. 7, it is assumed that the number of motion vectors which can be stored in the candidate list is restricted.

Referring to FIG. 7, the video signal processing apparatus may search for a reference view motion vector corresponding to the disparity vector of the current texture block and stores the reference view motion vector in the candidate list when the reference view motion vector is found (S710, Yes). When the reference view motion vector is not found (S710, No), the process proceeds to the next step.

The video signal processing apparatus may search for a motion vector of a first spatial neighboring block of the current texture block and stores the motion vector in the candidate list when the motion vector is found (S720, Yes). When the motion vector of the first spatial neighboring block is not found (S720, No), the process proceeds to the next step.

The first spatial neighboring block may include at least one of a left spatial neighboring block, an upper spatial neighboring block and a right upper spatial neighboring block of the current texture block.

The video signal processing apparatus may search for the disparity vector of the current texture block and store the disparity vector in the candidate list when the disparity vector is found (S730, Yes). When the disparity vector is not found (S730, No), the process proceeds to the next step.

The disparity vector may be one of a disparity vector derived using corresponding depth data of the current texture block and an inter-view motion vector derived from a disparity vector of a neighboring block coded through inter-view inter-prediction, as described above.

The video signal processing apparatus may search for a view synthesis prediction disparity vector of the current texture block and store the view synthesis prediction disparity vector in the candidate list when the view synthesis prediction disparity vector is found (S740, Yes). When the candidate list is full of motion vectors (S742, Yes), search may be ended.

When the view synthesis prediction disparity vector is stored in the candidate list, as described above with reference to FIG. 5, the view synthesis prediction flag value can be set.

When the view synthesis prediction disparity vector is not found (S740, No) or the candidate list is not full of motion vectors (S742, No), the process proceeds to the next step.

The video signal processing apparatus may search for a motion vector of a second spatial neighboring block of the current texture block and store the found motion vector in the candidate list when the motion vector is found (S750, Yes). Here, when the candidate list is full of motion vectors (S752, Yes), search may be ended.

When the motion vector is not searched (S750, No) or the candidate list is not full of motion vectors (S752, No), the process proceeds to the next step.

The second spatial neighboring block is a spatial neighboring block which is not included in the first spatial neighboring block and may include at least one of a left lower spatial neighboring block and a left upper spatial neighboring block of the current texture block.

The video signal processing apparatus may search for a motion vector of a temporal neighboring block of the current texture block and store the searched motion vector in the candidate list when the motion vector is found (S760, Yes). When the motion vector is not found (S760, No), search may be ended.

When the motion vectors are searched and stored in the candidate list in the aforementioned order, the view synthesis prediction mode can be used all the time, improving coding efficiency.

A description will be given of a motion vector search method for improving availability of the view synthesis prediction mode with reference to FIG. 8.

FIG. 8 is a flowchart illustrating a method of searching for motion information of a spatial neighboring block for view synthesis prediction according to an embodiment of the present invention. FIG. 8 shows the method of searching for motion vectors of spatial neighboring blocks shown in steps S720 and S750 of FIG. 7 in more detail.

Referring to FIG. 8, when a spatial neighboring block of the current texture block has been coded using view synthesis prediction (S810, Yes), the video signal processing apparatus may store a view synthesis prediction disparity vector of the spatial neighboring block in the candidate list (S820).

Even in this case, the view synthesis prediction flag value can be set to indicate that inter-prediction is performed using view synthesis prediction on the basis of the stored disparity vector, as described above with reference to FIG. 5.

When the spatial neighboring block has not been coded using view synthesis prediction (S810, No), spatial motion vectors can be stored as described with reference to FIG. 7 (S830).

Specifically, it is possible to check whether each texture block has been coded using view synthesis prediction by confirming view synthesis prediction use information (or a flag) which indicates whether the corresponding texture block has been coded using view synthesis prediction.

As described with reference to FIG. 8, availability of the view synthesis prediction mode can be improved by storing a view synthesis prediction disparity vector of a spatial neighboring block in the candidate list.

Referring back to FIG. 5, the video signal processing apparatus may perform inter-prediction on the current texture block using one of the motion vectors stored in the candidate list (S530). The method of performing inter-prediction using a reference view motion vector, a spatial motion vector, a temporal motion vector and a disparity vector has been described with reference to FIG. 3 and thus redundant description is omitted.

A description will be given of a method of performing inter-prediction using a view synthesis prediction disparity vector with reference to FIGS. 9 and 10.

As described above, a view synthesis prediction disparity vector refers to a disparity vector used for view synthesis prediction. The view synthesis prediction disparity vector can include a disparity vector and view synthesis prediction mode information. The view synthesis prediction mode information refers to information indicating that inter-prediction is performed through view synthesis prediction.

While the disparity vector and the view synthesis disparity vector of the current texture block may be the same vector, only the x component of the disparity vector can be stored in the candidate list, whereas both x and y components of the view synthesis disparity vector can be stored in the candidate list. For example, the disparity vector of the current texture block can be stored as (dvx, 0) in the candidate list and the view synthesis disparity vector thereof can be stored as (dvx, dvy) in the candidate list.

FIG. 9 illustrates a view synthesis prediction method according to an embodiment of the present invention.

Referring to FIG. 9, the video signal processing apparatus may check the view synthesis prediction flag and, when the view synthesis prediction flag is set (S910, Yes), acquire a corresponding depth block of a reference view, which is indicated by a view synthesis prediction disparity vector stored along with the view synthesis prediction flag (S920). Here, the corresponding depth block of the reference view, which is indicated by the view synthesis prediction disparity vector, may be a depth block that considers the view synthesis prediction disparity vector at the same position in a depth picture having the same POC in the reference view.

For example, when the left upper point of the current texture block is (px, py) and the view synthesis prediction disparity vector is (dvx, dvy), the left upper point of the depth block corresponding to the current texture block in the reference view can be (px+dvx, py+dvy). Alternatively, the y value of the view synthesis prediction disparity vector may be ignored and (px+dvx, py) may be determined as the left upper point of the depth block corresponding to the current texture block.

A modified disparity vector may be derived using a depth value of the acquired depth block (S930). Specifically, the modified disparity vector of the current texture block can be derived from the depth value. The disparity vector can be derived from the depth value using Equations 1 and 2, as described above.

Inter-view inter-prediction may be performed on the current texture block using the derived modified disparity vector (S940). Inter-view inter-prediction has been described above in detail and thus redundant description thereof is omitted.

FIG. 10 is a view for illustrating a view synthesis prediction method according to an embodiment of the present invention.

Referring to FIG. 10, for view synthesis prediction, a corresponding depth block of a reference view V0, which is indicated by a view synthesis prediction disparity vector DV1 of the current texture block, can be obtained and a modified disparity vector DV2 can be derived from a depth value D of the obtained depth block. Here, it is assumed that a texture picture $B_T$ and a depth picture $B_D$ of the reference view V0 have been decoded prior to a texture picture of a current view V1.

According to one embodiment of the present invention, the aforementioned candidate list may be generated in a merge mode. The merge mode refers to a mode of transmitting only information of a neighboring block without transmitting related motion information by referring to and reusing motion information in the neighboring block.

As described above, the video signal processing apparatus to which the present invention is applied may be included in a multimedia broadcast transmission/reception apparatus such as a DMB (digital multimedia broadcast) system to be used to decode video signals, data signals and the like. In addition, the multimedia broadcast transmission/reception apparatus may include a mobile communication terminal.

Furthermore, the video signal processing method to which the present invention is applied may be implemented as a computer-executable program and stored in a computer-readable recording medium and multimedia data having a data structure according to the present invention may also be stored in a computer-readable recording medium. The computer-readable recording medium includes all kinds of storage devices storing data readable by a computer system. Examples of the computer-readable recording medium include a ROM, a RAM, a CD-ROM, a magnetic tape, a floppy disk, an optical data storage device, and a medium using a carrier wave (e.g. transmission through the Internet). In addition, a bitstream generated according to the encoding method may be stored in a computer-readable recording medium or transmitted using a wired/wireless communication network.

[Industrial Applicability]

The present invention can be used to code a video signal.

**Claims**

1. A method for processing a video signal, comprising:

   searching for a reference view motion vector corresponding to a disparity vector of a current texture block, motion vectors of spatial neighboring blocks of the current texture block, the disparity vector of the current texture block, a view synthesis prediction disparity vector of the current texture block, and a motion vector of a temporal neighboring block of the current texture block, in a predetermined order;
   storing the found vectors in a candidate list in the predetermined order; and
   performing inter-prediction on the current texture block using one of the vectors stored in the candidate list,
   wherein the candidate list stores a predetermined number of vectors, and the predetermined order is set such that the view synthesis prediction disparity vector is always stored.

2. The method according to claim 1, wherein, when the spatial neighboring blocks of the current texture block have been coded using view synthesis prediction, view synthesis prediction disparity vectors of the spatial neighboring blocks are stored instead of the motion vectors thereof in the candidate list.

3. The method according to claim 1, wherein the spatial neighboring blocks of the current texture block include a left spatial neighboring block, an upper spatial neighboring block, a right upper spatial neighboring block, a left lower spatial neighboring block and a left upper spatial neighboring block.

4. The method according to claim 3, wherein the predetermined order corresponds to the order of the reference view motion vector, a motion vector of the left spatial neighboring block, a motion vector of the upper spatial neighboring block, a motion vector of the right upper spatial neighboring block, the disparity vector, the view synthesis prediction disparity vector, a motion vector of the left lower spatial neighboring block, a motion vector of the left upper spatial neighboring block, and the motion vector of the temporal neighboring block.

5. The method according to claim 1, wherein, when inter-prediction is performed on the current texture block using the view synthesis prediction disparity vector in the candidate list, the performing of inter-prediction on the current texture block comprises:

obtaining a corresponding depth block of a reference view, indicated by the view synthesis prediction disparity vector;
deriving a modified disparity vector using a depth value of the depth block; and
performing inter-view inter-prediction on the current texture block using the modified disparity vector.

6. The method according to claim 1, wherein the candidate list stores a view synthesis prediction flag indicating that inter-prediction is performed using view synthesis prediction, along with each vector,
wherein the view synthesis prediction flag is set when the view synthesis prediction disparity vector is stored in the candidate list.

7. An apparatus for processing a video signal, comprising:

a candidate list generator configured to search for a reference view motion vector corresponding to a disparity vector of a current texture block, motion vectors of spatial neighboring blocks of the current texture block, the disparity vector of the current texture block, a view synthesis prediction disparity vector of the current texture block and a motion vector of a temporal neighboring block of the current texture block, in a predetermined order and to store the searched vectors in a candidate list in the predetermined order; and
an inter-prediction execution unit configured to perform inter-prediction on the current texture block using one of the vectors stored in the candidate list,
wherein the candidate list generator stores a predetermined number of vectors in the candidate list and sets the predetermined order such that the view synthesis prediction disparity vector is always stored.

8. The apparatus according to claim 7, wherein, when the spatial neighboring blocks of the current texture block have been coded using view synthesis prediction, the candidate list generator stores view synthesis prediction disparity vectors of the spatial neighboring blocks in the candidate list instead of the motion vectors thereof.

9. The apparatus according to claim 7, wherein the spatial neighboring blocks of the current texture block include a left spatial neighboring block, an upper spatial neighboring block, a right upper spatial neighboring block, a left lower spatial neighboring block and a left upper spatial neighboring block.

10. The apparatus according to claim 9, wherein the predetermined order corresponds to the order of the reference view motion vector, a motion vector of the left spatial neighboring block, a motion vector of the upper spatial neighboring block, a motion vector of the right upper spatial neighboring block, the disparity vector, the view synthesis prediction disparity vector, a motion vector of the left lower spatial neighboring block, a motion vector of the left upper spatial neighboring block, and the motion vector of the temporal neighboring block.

11. The apparatus according to claim 7, wherein, when inter-prediction is performed on the current texture block using the view synthesis prediction disparity vector in the candidate list, the inter-prediction execution unit obtains a corresponding depth block of a reference view, which is indicated by the view synthesis prediction disparity vector, derives a modified disparity vector using a depth value of the depth block and performs inter-view inter-prediction on the current texture block using the modified disparity vector.

12. The apparatus according to claim 7, wherein the candidate list stores a view synthesis prediction flag indicating that inter-prediction is performed using view synthesis prediction, along with each vector,
wherein the candidate list generator sets the view synthesis prediction flag when the view synthesis prediction disparity vector is stored in the candidate list.

# FIG. 1

FIG. 2

EP 2 986 000 A1

FIG. 3

Inter-prediction unit (260)

Entropy
decoding unit → | Candidate list generator | → | Inter-prediction
(210) | (261) | | execution unit (262) | →

Inter-prediction
execution unit
(250)

FIG. 4

t₀

POC

MCP

t₁

Current
Block

DCP

V0                    V1

## FIG. 5

Start

Search for reference view motion vector corresponding to disparity
vector of current texture block, motion vectors of spatial neighboring
blocks of current texture block, disparity vector of current texture block,
view synthesis prediction disparity vector of current texture block and
motion vectors of temporal neighboring blocks of current
current texture block in predetermined order — S510

Store found vectors in candidate list in predetermined order — S520

Perform inter-prediction on current texture block using
one of vectors stored in candidate list — S530

End

## FIG. 6

$t_0$

9

8

Temporal

7          2  3

$t_1$        Current
PU

1
6

V1

Base view
w/ DV

4  DCP

5  VSP

0

V0

## FIG. 7

```
                          Start

                                              S710
         Reference view motion vector corresponding to    Yes    Store found vector in candidate list ── S711
         disparity vector of current texture block searched?

                          No

                                              S720
         Motion vector of first spatial neighboring block   Yes    Store found vector in candidate list ── S721
                 of current texture block searched?

                          No

                                              S730
         Disparity vector of current texture block searched?  Yes    Store found vector in candidate list ── S731

                          No

                                              S740
         View synthesis prediction disparity vector    Yes    Store found vector in candidate list ── S741
                 of current texture block searched?

                                                                                          S742
                    No                              No          Candidate list = full?    Yes

                                              S750
         Motion vector of second spatial neighboring    Yes    Store found vector in candidate list ── S751
                 block of current texture block searched?

                                                                                          S752
                    No                              No          Candidate list = full?    Yes

                                              S760
         Motion vector of temporal neighboring block   Yes    Store found vector in candidate list ── S761
                 of current texture block searched?

                          No

                                              End
```

## FIG. 8

```
                    ┌──────────┐
                    │  Start   │
                    └──────────┘
                         │
                         ▼
                    ╱─────────────────╲
                   ╱  Spatial neighboring block of ╲        S810
                  ╱ current texture block coded using view ╲──────  Yes   ┌──────────────────────────────────────┐   S820
                  ╲  synthesis prediction?         ╱──────────────▶│ Store view synthesis prediction disparity vector │
                   ╲                              ╱                 │   of spatial neighboring block in candidate list  │
                    ╲─────────────────╱                            └──────────────────────────────────────┘
                         │ No                                                       │
                         ▼                                                          │
        ┌──────────────────────────────────────┐                                   │
        │ Store motion vector of spatial neighboring block in │─── S830            │
        │              candidate list           │                                  │
        └──────────────────────────────────────┘                                   │
                         │                                                          │
                         ▼◀─────────────────────────────────────────────────────────┘
                    ┌──────────┐
                    │   End    │
                    └──────────┘
```

## FIG. 9

```
                    ┌──────────┐
                    │  Start   │
                    └──────────┘
                         │
                         ▼
        No          ╱─────────────────╲        S910
    ┌───────────────  View synthesis prediction flat set? ╲──────
    │               ╲─────────────────╱
    │                        │ Yes
    │                        ▼
    │       ┌──────────────────────────────────────┐
    │       │ Obtain corresponding depth block of reference view, │─── S920
    │       │ indicated by view synthesis prediction disparity vector │
    │       └──────────────────────────────────────┘
    │                        │
    │                        ▼
    │       ┌──────────────────────────────────────┐
    │       │    Derive modified disparity vector using    │─── S930
    │       │         depth value of depth block          │
    │       └──────────────────────────────────────┘
    │                        │
    │                        ▼
    │       ┌──────────────────────────────────────┐
    │       │ Perform inter-view inter-prediction on current texture │─── S940
    │       │      block using modified disparity vector       │
    │       └──────────────────────────────────────┘
    │                        │
    └────────────────────────▼
                    ┌──────────┐
                    │   End    │
                    └──────────┘
```

## FIG. 10

## INTERNATIONAL SEARCH REPORT

| International application No. |
|---|
| **PCT/KR2014/003131** |

| A. | CLASSIFICATION OF SUBJECT MATTER |
|---|---|

*H04N 19/51(2014.01)i, H04N 19/513(2014.01)i*

According to International Patent Classification (IPC) or to both national classification and IPC

| B. | FIELDS SEARCHED |
|---|---|

Minimum documentation searched (classification system followed by classification symbols)

H04N 19/51; H04N 13/00; H04N 19/597; H04N 19/105; H04N 19/139; H04N 19/117; H04N 19/30; H04N 19/513

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: multi-view point, video, candidate, reference view, spatial neighbor, change, prediction, temporal neighbor, vector, presetup, the number, storage, inter prediction.

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2013-0030232 A (INDUSTRY-UNIVERSITY COOPERATION FOUNDATION KOREA AEROSPACE UNIVERSITY et al.) 26 March 2013<br>See paragraphs [0224]-[0304]; and figures 14-20. | 1-12 |
| A | KR 10-2012-0118780 A (SAMSUNG ELECTRONICS CO., LTD.) 29 October 2012<br>See paragraphs [0038]-[0059]; and figures 3-9. | 1-12 |
| A | KR 10-0959536 B1 (LG ELECTRONICS INC.) 27 May 2010<br>See paragraphs [0115]-[0149]; and figures 9-13. | 1-12 |
| A | KR 10-2012-0033289 A (ELECTRONICS AND TELECOMMUNICATIONS RESEARCH INSTITUTE et al.) 06 April 2012<br>See paragraphs [0133]-[0179]; and figures 7-12. | 1-12 |
| A | KR 10-2012-0118043 A (NIPPON TELEGRAPH AND TELEPHONE CORPORATION) 25 October 2012<br>See paragraphs [0111]-[0140]; and figures 3-4. | 1-12 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 AUGUST 2014 (07.08.2014) | **11 AUGUST 2014 (11.08.2014)** |
| Name and mailing address of the ISA/KR<br>Korean Intellectual Property Office<br>Government Complex-Daejeon, 189 Seonsa-ro, Daejeon 302-701,<br>Republic of Korea<br>Facsimile No. 82-42-472-7140 | Authorized officer<br><br><br>Telephone No. |

Form PCT/ISA/210 (second sheet) (July 2009)

INTERNATIONAL SEARCH REPORT
Information on patent family members

International application No.

**PCT/KR2014/003131**

| Patent document cited in search report | Publication date | Patent family member | Publication date |
|---|---|---|---|
| KR 10-2013-0030232 A | 26/03/2013 | KR 10-1419012 B1 | 14/07/2014 |
| | | KR 10-2013-0030181 A | 26/03/2013 |
| | | KR 10-2013-0111501 A | 10/10/2013 |
| | | KR 10-2013-0113400 A | 15/10/2013 |
| | | WO 2013-039356 A2 | 21/03/2013 |
| | | WO 2013-039356 A3 | 16/05/2013 |
| KR 10-2012-0118780 A | 29/10/2012 | CN 103609125 A | 26/02/2014 |
| | | EP 2700231 A2 | 26/02/2014 |
| | | US 2012-0269269 A1 | 25/10/2012 |
| | | WO 2012-144829 A2 | 26/10/2012 |
| | | WO 2012-144829 A3 | 17/01/2013 |
| KR 10-0959536 B1 | 27/05/2010 | AU 2007-232607 A1 | 11/10/2007 |
| | | AU 232607 B2 | 16/09/2010 |
| | | BR PI0710048 A2 | 02/08/2011 |
| | | CA 2647735 A1 | 11/10/2007 |
| | | DE 202007019446 U1 | 05/09/2012 |
| | | DE 202007019454 U1 | 03/09/2012 |
| | | DE 202007019458 U1 | 13/09/2012 |
| | | DE 202007019459 U1 | 13/09/2012 |
| | | EP 2005752 A1 | 24/12/2008 |
| | | EP 2005752 A4 | 09/06/2010 |
| | | EP 2005753 A1 | 24/12/2008 |
| | | EP 2005753 A4 | 03/02/2010 |
| | | EP 2008460 A1 | 31/12/2008 |
| | | EP 2008460 A4 | 03/02/2010 |
| | | EP 2008461 A1 | 31/12/2008 |
| | | EP 2008461 A4 | 03/02/2010 |
| | | EP 2025170 A1 | 18/02/2009 |
| | | EP 2025170 A4 | 17/02/2010 |
| | | JP 2009-532930 A | 10/09/2009 |
| | | JP 2009-532931 A | 10/09/2009 |
| | | JP 2009-532932 A | 10/09/2009 |
| | | JP 2009-532933 A | 10/09/2009 |
| | | JP 2009-532934 A | 10/09/2009 |
| | | KR 10-0937431 B1 | 18/01/2010 |
| | | KR 10-0943911 B1 | 24/02/2010 |
| | | KR 10-0949974 B1 | 29/03/2010 |
| | | KR 10-0949975 B1 | 29/03/2010 |
| | | KR 10-0949976 B1 | 29/03/2010 |
| | | KR 10-0949977 B1 | 29/03/2010 |
| | | KR 10-0949978 B1 | 29/03/2010 |
| | | KR 10-0949979 B1 | 29/03/2010 |
| | | KR 10-0949980 B1 | 29/03/2010 |
| | | KR 10-0949981 B1 | 29/03/2010 |
| | | KR 10-0949982 B1 | 29/03/2010 |
| | | KR 10-0949983 B1 | 29/03/2010 |
| | | KR 10-0959537 B1 | 27/05/2010 |

Form PCT/ISA/210 (patent family annex) (July 2009)

INTERNATIONAL SEARCH REPORT
Information on patent family members

International application No.

**PCT/KR2014/003131**

| Patent document cited in search report | Publication date | Patent family member | Publication date |
|---|---|---|---|
| | | KR 10-0959538 B1 | 27/05/2010 |
| | | KR 10-0966567 B1 | 29/06/2010 |
| | | KR 10-0966568 B1 | 29/06/2010 |
| | | KR 10-0966569 B1 | 30/06/2010 |
| | | KR 10-0966570 B1 | 29/06/2010 |
| | | KR 10-0998912 B1 | 08/12/2010 |
| | | KR 10-2009-0004996 A | 12/01/2009 |
| | | KR 10-2009-0006093 A | 14/01/2009 |
| | | KR 10-2009-0006094 A | 14/01/2009 |
| | | KR 10-2009-0006095 A | 14/01/2009 |
| | | KR 10-2009-0007331 A | 16/01/2009 |
| | | KR 10-2009-0096651 A | 11/09/2009 |
| | | KR 10-2009-0099089 A | 21/09/2009 |
| | | KR 10-2009-0099090 A | 21/09/2009 |
| | | KR 10-2009-0099091 A | 21/09/2009 |
| | | KR 10-2009-0099092 A | 21/09/2009 |
| | | KR 10-2009-0099093 A | 21/09/2009 |
| | | KR 10-2009-0099094 A | 21/09/2009 |
| | | KR 10-2009-0099095 A | 21/09/2009 |
| | | KR 10-2009-0099096 A | 21/09/2009 |
| | | KR 10-2009-0099584 A | 22/09/2009 |
| | | KR 10-2009-0099585 A | 22/09/2009 |
| | | KR 10-2009-0099586 A | 22/09/2009 |
| | | KR 10-2009-0099587 A | 22/09/2009 |
| | | KR 10-2009-0101496 A | 28/09/2009 |
| | | KR 10-2009-0101497 A | 28/09/2009 |
| | | KR 10-2009-0101498 A | 28/09/2009 |
| | | KR 10-2009-0101499 A | 28/09/2009 |
| | | KR 10-2009-0101500 A | 28/09/2009 |
| | | KR 10-2009-0101501 A | 28/09/2009 |
| | | KR 10-2009-0101502 A | 28/09/2009 |
| | | KR 10-2010-0074314 A | 01/07/2010 |
| | | MX 2008012437 A | 18/11/2008 |
| | | US 2009-0279608 A1 | 12/11/2009 |
| | | US 2009-0296811 A1 | 03/12/2009 |
| | | US 2010-0020870 A1 | 28/01/2010 |
| | | US 2010-0026882 A1 | 04/02/2010 |
| | | US 2010-0026883 A1 | 04/02/2010 |
| | | US 2010-0026884 A1 | 04/02/2010 |
| | | US 2010-0027653 A1 | 04/02/2010 |
| | | US 2010-0027654 A1 | 04/02/2010 |
| | | US 2010-0027659 A1 | 04/02/2010 |
| | | US 2010-0027660 A1 | 04/02/2010 |
| | | US 2010-0027682 A1 | 04/02/2010 |
| | | US 2010-0074334 A1 | 25/03/2010 |
| | | US 2010-0080293 A1 | 01/04/2010 |
| | | US 2010-0086036 A1 | 08/04/2010 |
| | | US 2010-0091843 A1 | 15/04/2010 |
| | | US 2010-0091844 A1 | 15/04/2010 |
| | | US 2010-0091883 A1 | 15/04/2010 |

Form PCT/ISA/210 (patent family annex) (July 2009)

International application No.

**PCT/KR2014/003131**

| Patent document cited in search report | Publication date | Patent family member | Publication date |
|---|---|---|---|
| | | US 2010-0091884 A1 | 15/04/2010 |
| | | US 2010-0091885 A1 | 15/04/2010 |
| | | US 2010-0091886 A1 | 15/04/2010 |
| | | US 2010-0111169 A1 | 06/05/2010 |
| | | US 2010-0128787 A1 | 27/05/2010 |
| | | US 2010-0215100 A1 | 26/08/2010 |
| | | US 2010-0260265 A1 | 14/10/2010 |
| | | US 2010-0316135 A1 | 16/12/2010 |
| | | US 2010-0316136 A1 | 16/12/2010 |
| | | US 2010-0316360 A1 | 16/12/2010 |
| | | US 2010-0316361 A1 | 16/12/2010 |
| | | US 2010-0316362 A1 | 16/12/2010 |
| | | US 7782943 B2 | 24/08/2010 |
| | | US 7782944 B2 | 24/08/2010 |
| | | US 7782945 B2 | 24/08/2010 |
| | | US 7782946 B2 | 24/08/2010 |
| | | US 7782947 B2 | 24/08/2010 |
| | | US 7782948 B2 | 24/08/2010 |
| | | US 7782949 B2 | 24/08/2010 |
| | | US 7782950 B2 | 24/08/2010 |
| | | US 8170108 B2 | 01/05/2012 |
| | | WO 2007-114608 A1 | 11/10/2007 |
| | | WO 2007-114609 A1 | 11/10/2007 |
| | | WO 2007-114610 A1 | 11/10/2007 |
| | | WO 2007-114611 A1 | 11/10/2007 |
| | | WO 2007-114612 A1 | 11/10/2007 |
| KR 10-2012-0033289 A | 06/04/2012 | US 2013-0182779 A1 | 18/07/2013 |
| | | WO 2012-044093 A2 | 05/04/2012 |
| | | WO 2012-044093 A3 | 31/05/2012 |
| KR 10-2012-0118043 A | 25/10/2012 | CA 2790406 A1 | 01/09/2011 |
| | | EP 2541939 A1 | 02/01/2013 |
| | | JP 05237500 B2 | 17/07/2013 |
| | | US 2012-0320986 A1 | 20/12/2012 |
| | | WO 2011-105297 A1 | 01/09/2011 |